# FASCICULE DE BREVET EUROPEEN

(11) **EP 1 741 960 B1**
(45) Date de publication et mention de la délivrance du brevet: **07.05.2008**
(21) Numéro de dépôt: 06300588.8
(22) Date de dépôt: 14.06.2006
(51) Int. Cl.: F16H 57/02, F16H 57/04

(54) **Boîte de vitesses à compartiments étanches**
Getriebegehäuse mit abgedichteten Räumen
Gearbox having sealed compartments

(30) Priorité: 04.07.2005 FR 0552026
(43) Date de publication de la demande: 10.01.2007
(73) Titulaire: RENAULT S.A.S., 92100 Boulogne Billancourt (FR)
(72) Inventeur: Buannec, Michel, 78480 Verneuil Sur Seine (FR); Francois, Ludovic, 75017 Paris (FR)
(74) Mandataire: Rougemont, Bernard

(56) Documents cités:
- EP-A- 1 452 778
- DE-A1- 19 821 164
- DE-C- 825 359
- KLOEPFER M ET AL: "FLAECHENDICHTVERBINDUNGEN HOCHBELASTETER GETRIEBEGEHAEUSE" ANTRIEBSTECHNIK, VEREINIGTE FACHVERLAGE, MAINZ, DE, vol. 38, no. 6, juin 1999 (1999-06), pages 61-66, XP000828962 ISSN: 0722-8546

## Description

La présente invention concerne les boîtes de vitesses de véhicule automobile comprenant plusieurs arbres parallèles, munis chacun d'une pluralité de pignons.

Elle porte sur une boîte de vitesses de véhicule automobile compartimentée, comprenant au moins un embrayage situé dans un carter d'embrayage, et un mécanisme composé d'un ensemble d'arbres et de pignons de vitesses situés dans un carter de mécanisme

Cette invention s'applique notamment sur une boîte de vitesses de véhicule automobile à arbres parallèles munis d'une pluralité de pignons, comprenant deux arbres primaires concentriques reliés alternativement au moteur du véhicule par un premier et un deuxième embrayage, et deux arbres secondaires reliés aux roues du véhicule par un différentiel.

Elle trouve ainsi une application privilégiée, mais non limitative, sur les boîtes de vitesses robotisées à arbres primaires concentriques, et à double embrayage d'entrée.

Par la publication DE 198 21 164, qui est considéré comme étant l'état de la technique le plus proche, on connaît une boîte de vitesses du type indiqué ci-dessus, dite à « double embrayage », comportant de façon classique un carter en deux part ies accouplées. Ces deux parties de carter, dites «carter d'embrayage » et «carter de mécanisme », définissent en réalité seul volume, renfermant d'une part les deux embrayages, et d'autre part le mécanisme de commande interne de boîte, c'est-à-dire les pignons, les fourchettes, les synchroniseurs, et leurs organes de commande robotisée, dont un distributeur et une pompe, ainsi que des actionneurs hydrauliques de sélection et de passage des vitesses.

Dans une telle architecture, le mécanisme (synchroniseurs et engrenages), et le système hydraulique de commande, reçoivent la même huile, en circulation à l'intérieur de l'ensemble des carters. Cette disposition pose des difficultés, car le fonctionnement optimal de la boîte suppose l'ut ilisat ion d'une huile relativement visqueuse pour les synchroniseurs et les engrenages, tandis que le système hydraulique de commande requiert une huile plus fluide. Ainsi, l'utilisation de la même huile pour la lubrification des mécanismes, et pour le circuit hydraulique, risque de dégrader ce dernier, car l'huile est salie par la lubrification du mécanisme. Il est alors prudent de prévoir un filtre sous pression en sortie de la pompe, en plus du filtre d'entrée. Enfin, avec une huile trop fluide, il n'est pas possible de phosphater les pignons pour prévenir leur usure. Dans ces conditions, il est nécessaire de prévoir à l'origine une « sur longueur » sur les dentures de pignon, en prévision de cette usure.

Four traiter ce problème, il a déjà été proposé de faire chauffer l'huile de la boîte lors du démarrage du véhicule. Cette mesure permet de réduire rapidement sa viscosité, de manière à faciliter la commande des actionneurs en début de roulage. Toutefois, cette solution suppose un pilotage suffisamment fin des moyens de chauffage de l'huile pour être satisfaisante, ou bien de ne pas laisser le véhicule avancer, tant que la température de l'huile n'est pas suffisante.

La présente invention vise à assurer dans les meilleures conditions la lubrification des organes mécaniques d'une boite de vitesses, et le pilotage de ses embrayages et de ses actionneurs.

Dans ce but, elle propose que le carter de mécanisme présente deux compartiments étanches, et que l'étanchéité entre les deux carters et entre les deux compartiments du carter de mécanisme, soit assurée par une plaque métallique épousant le plan de joint des deux carters, et entourant les deux compartiments du carter de mécanisme.

Les deux huiles étant de nature très différentes, il est indispensable d'avoir une étanchéité parfaite entre les compartiments renfermant des huiles différentes. A ce sujet, l'application habituelle de pâtes d'étanchéité sur le plan de joint des carters n'offre pas de garantie suffisante.

Conformément à l'invention, on utilise donc une plaque d'étanchéité, qui présente des bourrelets de caoutchouc sur moulés sur ses bords, ou, en variante, une couche de caoutchouc sur chacune de ses faces.

D'autres caractéristiques et avantages de l'invention apparaîtront clairement à la lecture de la description suivante d'un mode de réalisation particulier de celle-ci, en liaison avec les dessins annexés, sur lesquels :
- la figure 1 est une coupe simplifiée de boîte de vitesses compartimentée,
- la figure 2 montre l'intérieur d'une boîte de vitesse conforme à l'invention, dont le carter de mécanisme est ouvert, et
- les figures 3A, 3B illustrent deux variantes de réalisation de la plaque d'étanchéité entre les carters.

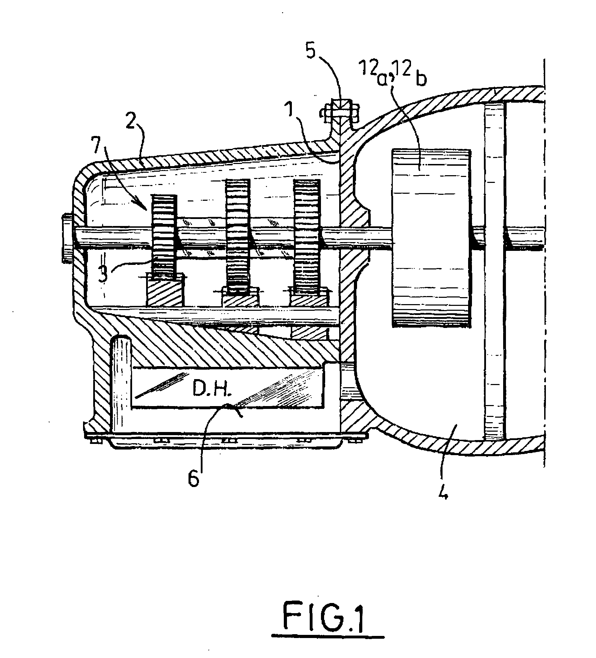

Sur la figure 1, on a représenté de façon simplifiée, un mécanisme de boîte de vitesses qui n'a toutefois aucun caractère limitatif quant à l'application de l'invention. Sur cette figure, on voit en coupe un carter d'embrayage 1 et un carter de mécanisme 2 d'une boîte de vitesses à arbres parallèles et à engrenages. Les carters 1, 2 présentent une face d'accouplement 5. Ils renferment respectivement un embrayage double 12a, 12b dans un premier compartiment 4 fermé, et un mécanisme de changement de vitesses 3 dans un second compartiment fermé 7.

Le mécanisme 3, du type à arbres parallèles munis d'une pluralité de pignons de vitesses, peut inclure par exemple les éléments suivants, non représentés : deux arbres primaires concentriques reliés alternativement au moteur du véhicule par un premier et un deuxième embrayage, et deux arbres secondaires reliés aux roues du véhicule par un différentiel. S'il s'agit d'une boîte de vitesses à arbres primaires concentriques, l'embrayage 12a, 12b du premier compartiment peut 4 peut correspondre soit à deux embrayages, soit à un double embrayage multidisques humide. Le troisième compartiment 6 renferme des éléments de commande hydraulique des embrayages, dont une pompe (non représentée), et un distributeur hydraulique DH.

Comme indiqué plus haut, l'invention trouve une application privilégiée sur une boîte de vitesses robotisée à double embrayage d'entrée, dans laquelle les embrayages sont du type « multidisques humides à bain d'huile ». Dans une telle boîte, la commande des embrayages s'effectue avec un distributeur hydraulique et des actionneurs hydrauliques, comme dans une transmission automatique. L'huile de la commande hydraulique doit idéalement être une huile relativement fluide, du type utilisé dans les transmissions automatiques à train épicycloïdaux et convertisseur hydrocinétique de couple, alors que la lubrification du mécanisme à engrenages est mieux assurée par une huile plus visqueuse, de boîte manuelle conventionnelle à engrenages.

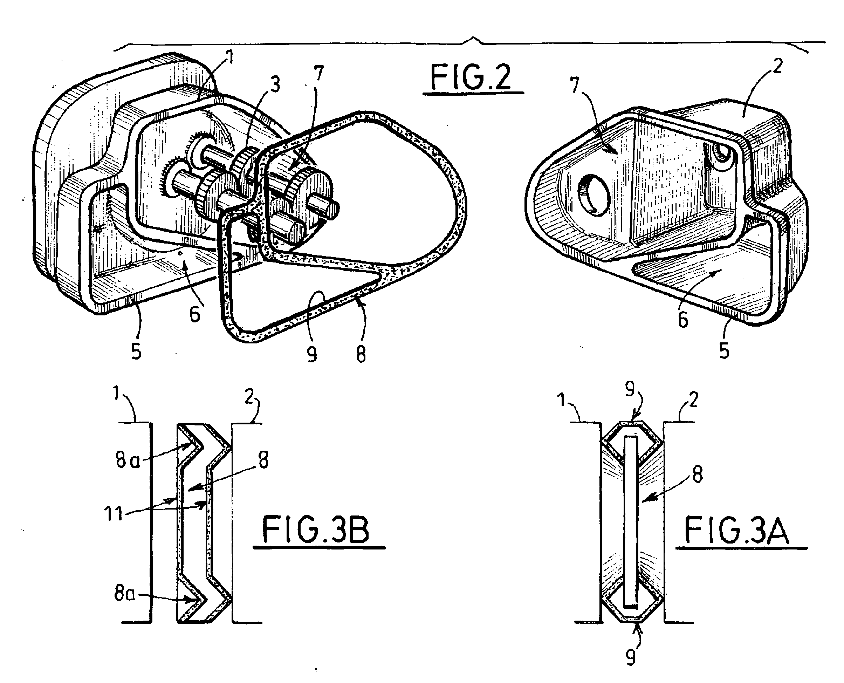

Comme indiqué plus haut, il ne faut surtout pas qu'il y ait de mélange entre les huiles, car l'huile de pignonnerie est très visqueuse, et le distributeur, la pompe et l'embrayage ne sont pas du tout adaptés à cette viscosité. L'invention propose donc la disposit ion d'un joint 8 spécial entre les deux carters entre leurs faces d'accouplement. Ce joint mis en évidence sur la figure 2, se présente sous la forme une plaque métallique 8 épousant le plan de joint des deux carters, et entourant les deux compartiments du carter de mécanisme. Cette figure montre la présence d'un bourrelet 9 sur un des bords de la plaque.

Selon la variante de la figure 3A, la plaque peut avantageusement présenter des bourrelets de caoutchouc surmoulés 9, sur l'ensemble de ses bords. Une autre variante, illustrée par la figure 3B, est que la plaque présente des formes embouties 8a, permettant de retenir une couche de caoutchouc sur chacune 11 de ses faces. Toutefois, ces figures n'ont qu'une valeur d'exemple, et on peut prévoir d'autres modes de réalisation ou de finition du joint, sans sortir du cadre de l'invention.

En conclusion, le compartimentage des carters et les moyens d'étanchéité appropriés proposés par l'invention, permettent d'utiliser des huiles très différentes dans le compartiment renfermant le mécanisme de la boîte, et dans ceux qui renferment les embrayages et leur système de commande hydraulique. Ainsi, l'ensemble des éléments mécaniques, notamment les pignons et les synchroniseurs, peut être lubrifié par une huile plus visqueuse que celle du circuit de commande hydraulique.

## Revendications

1. Boîte de vitesses de véhicule automobile compartimentée, comprenant au moins un embrayage situé dans un carter d'embrayage (1) et un mécanisme (3) composé d'un ensemble d'arbres et de pignons de vitesses situés dans un carter de mécanisme (2), **caractérisée en ce que** le carter de mécanisme présente deux compartiments étanches (6, 7), et **en ce que** l'étanchéité entre les deux carters (1, 2) et entre les deux compartiments (6, 7) du carter de mécanisme (1) est assurée par une plaque métallique (8) épousant le plan de joint des deux carters (5), et entourant les deux compartiments (6, 7) du carter de mécanisme (2).

2. Boîte de vitesses selon la revendication 1, **caractérisée en ce que** la plaque (8) présente des bourrelets de caoutchouc (9) surmoulés sur ses bords.

3. Boîte de vitesses selon la revendication 1, **caractérisée en ce que** la plaque présent e une couche de caoutchouc (11) sur chacune de ses f aces.

4. Boîte de vitesses selon la revendication 1, 2 ou 3, **caractérisée en ce que** la plaque (8) présent e des f or mes embout ies (8a).

5. Boîte de vitesses selon l'une des revendications précédentes, **caractérisée en ce que** les deux compartiments (6, 7) du carter de mécanisme renferment deux huiles de viscosité différente convenant respectivement pour la lubrification du mécanisme, et pour la commande d'embrayages humides.

6. Boîte de vitesses selon l'une des revendications précédentes, **caractérisée en ce qu**'un compartiment du carter de mécanisme (6) renfermant des éléments de commande hydraulique d'embrayage, communique avec le carter d'embrayage (2).

7. Boîte de vitesses selon la revendication 6, **caractérisée en ce que** le compartiment (6) du carter de mécanisme qui communique avec le carter d'embrayage (2) renferme une pompe et un distributeur hydraulique

8. Boîte de vitesses selon la revendication 6 ou 7, **caractérisée en ce que** le carter d'embrayage (1) et le compartiment (6) en communicat ion avec celui-ci, renferment une huile plus fluide que l'autre compartiment.

9. Boîte de vitesses selon l'une des revendications précédentes, **caractérisée en ce que** le carter d'embrayage (1) renferme deux embrayages (12a, 12b) respectivement reliés à un premier et à un second arbre primaire du carter de mécanisme (3).

10. Boîte de vitesses selon la revendication 9, **caractérisée en ce que** les deux arbres primaires sont concentriques.

## Claims

1. Compartmentalized gearbox for a motor vehicle, comprising at least one clutch situated in a clutch housing (1) and a mechanism (3) composed of a set of shafts and gear pinions situated in a mechanism housing (2), **characterized in that** the mechanism housing has two sealed compartments (6, 7), and **in that** the sealing between the two housings (1, 2) and between the two compartments (6, 7) of the mechanism housing (1) is provided by a metal plate (8) which hugs the contour of the junction plane of the two housings (5) and which surrounds the two compartments (6, 7) of the mechanism housing (2).

2. Gearbox according to Claim 1, **characterized in that** the plate (8) has rubber beads (9) moulded over its edges.

3. Gearbox according to Claim 1, **characterized in that** the plate has a rubber layer (11) on each of its faces.

4. Gearbox according to Claim 1, 2 or 3 **characterized in that** the plate (8) has stamped shapes (8a).

5. Gearbox according to one of the preceding claims, **characterized in that** the two compartments (6, 7) of the mechanism housing contain two oils of different viscosity which are respectively suitable for lubricating the mechanism and for the control of wet clutches.

6. Gearbox according to one of the preceding claims, **characterized in that** one compartment of the mechanism housing (6) containing hydraulic clutch control elements communicates with the clutch housing (2) .

7. Gearbox according to Claim 6, **characterized in that** the compartment (6) of the mechanism housing that communicates with the clutch housing (2) contains a pump and a hydraulic distributor.

8. Gearbox according to Claim 6 or 7, **characterized in that** the clutch housing (1) and the compartment (6) in communication therewith contain an oil which is more fluid than that of the other compartment.

9. Gearbox according to one of the preceding claims, **characterized in that** the clutch housing (1) contains two clutches (12a, 12b) which are respectively connected to a first primary shaft and to a second primary shaft of the mechanism housing (3).

10. Gearbox according to Claim 9, **characterized in that** the two primary shafts are concentric.

## Patentansprüche

1. Unterteiltes Kraftfahrzeug-Schaltgetriebe, das mindestens eine Kupplung, die in einem Schaltgehäuse (1) angeordnet ist, und einen Mechanismus (3) aufweist, der aus einer Gruppe von Getriebewellen und -ritzeln besteht, die in einem Mechanismusgehäuse (2) angeordnet sind, **dadurch gekennzeichnet, dass** das Mechanismusgehäuse zwei dichte Abteile (6, 7) aufweist, und dass die Dichtheit zwischen den zwei Gehäusen (1, 2) und zwischen den zwei Abteilen (6, 7) des Mechanismusgehäuses (1) von einer Metallplatte (8) gewährleistet wird, die sich an die Verbindungsebene der zwei Gehäuse (5) anpasst und die zwei Abteile (6, 7) des Mechanismusgehäuses (2) umgibt.

2. Schaltgetriebe nach Anspruch 1, **dadurch gekennzeichnet, dass** die Platte (8) auf ihre Ränder aufgeformte Kautschukwülste (9) aufweist.

3. Schaltgetriebe nach Anspruch 1, **dadurch gekennzeichnet, dass** die Platte auf jeder ihrer Seiten eine Kautschukschicht (11) aufweist.

4. Schaltgetriebe nach Anspruch 1, 2 oder 3, **dadurch gekennzeichnet, dass** die Platte (8) tiefgezogene Formen (8a) aufweist.

5. Schaltgetriebe nach einem der vorhergehenden Ansprüche, **dadurch gekennzeichnet, dass** die zwei Abteile (6, 7) des Mechanismusgehäuses zwei Öle mit unterschiedlicher Viskosität enthalten, die für die Schmierung des Mechanismus bzw. für die Steuerung von Nasskupplungen geeignet sind.

6. Schaltgetriebe nach einem der vorhergehenden Ansprüche, **dadurch gekennzeichnet, dass** ein Abteil (6) des Mechanismusgehäuses, das Elemente einer hydraulischen Kupplungssteuerung enthält, mit dem Kupplungsgehäuse (2) in Verbindung steht.

7. Schaltgetriebe nach Anspruch 6, **dadurch gekennzeichnet, dass** das Abteil (6) des Mechanismusgehäuses, das mit dem Kupplungsgehäuse (2) in Verbindung steht, eine Pumpe und einen Hydraulikverteiler enthält.

8. Schaltgetriebe nach Anspruch 6 oder 7, **dadurch gekennzeichnet, dass** das Kupplungsgehäuse (1) und das mit diesem in Verbindung stehende Abteil (6) ein flüssigeres Öl als das andere Abteil enthalten.

9. Schaltgetriebe nach einem der vorhergehenden Ansprüche, **dadurch gekennzeichnet, dass** das Kupplungsgehäuse (1) zwei Kupplungen (12a, 12b) enthält, die mit einer ersten bzw. einer zweiten Antriebswelle des Mechanismusgehäuses verbunden sind (3).

10. Schaltgetriebe nach Anspruch 9, **dadurch gekennzeichnet, dass** die zwei Antriebswellen konzentrisch sind.
